# EUROPEAN PATENT SPECIFICATION

(11) **EP 1 945 729 B1**
(45) Date of publication and mention of the grant of the patent: **02.05.2012**
(21) Application number: 06799568.8
(22) Date of filing: 05.10.2006
(51) Int. Cl.: C09J 161/24

(54) **LOW EMISSION ADHESIVE SYSTEM**
EMISSIONSARMES KLEBSTOFFSYSTEM
SYSTEME ADHESIF DE FAIBLE EMISSION

(30) Priority: 05.10.2005 NO 20054572
(43) Date of publication of application: 23.07.2008
(73) Proprietor: Dynea OY, 49401 Hamina (FI)
(72) Inventor: PEDERSEN, Astrid, NO-2020 Skedsmokorset (NO); SANDBAKKEN, Per, Olav, NO-0752 Oslo (NO)
(74) Representative: Balle, Morten
(86) International application number: PCT/NO2006/000343
(87) International publication number: WO 2007/040410

(56) References cited:
- EP-A1- 0 501 174
- GB-A- 589 131
- JP-A- 56 015 837
- US-A- 4 409 293

## Description

### Field of invention

The present invention relates to field of urea formaldehyde adhesive systems for manufacturing of glued products, where the emission of formaldehyde from the glued product is substantially reduced compared with prior art urea formaldehyde adhesives. More specifically, the invention relates to a modified adhesive system and to a modifier for urea formaldehyde adhesive systems.

### Background of the invention

Amino resins such as urea formaldehyde (UF), modified UF and melamine urea formaldehyde (MUF) adhesive systems have been used for decades for gluing of wood based products. These amino resins are used in foliation, veneering, production of MDF, HDF and chipboards, and laminated products, e.g. parquet, furniture boards, solid wood laminates, plywood, curved plywood etc. The composition of the adhesive system is adjusted to meet the criterions for the actual product, such as the quality of the glue line, in addition to economical and practical factors, such as the cost of the adhesive /adhesive system, pot life, assembly time and pressing/hardening time.

Formaldehyde based adhesives will release varying amounts of formaldehyde during production of the glue and during production of the glued products. There will also be some formaldehyde emission from the finished glued product. There are strict regulations on the formaldehyde concentration in working environments and in the living areas (indoor air quality). Maximum limits for emission of formaldehyde in productions facilities and from the glued products are set by different authorities. Accordingly, a substantial effort has been done by several actors in research and in the adhesive industry to reduce the emission of formaldehyde in the production of wooden products and from glued wooden products, without unacceptable increase in cost or loss of quality in the glued products.

The release of formaldehyde from an adhesive is principally determined by the ratio of formaldehyde to urea (F:U) in the adhesive system. Accordingly, considerable efforts have been done to reduce this ratio the last decades. For chipboards this has resulted in a reduction of formaldehyde emission from a level typically about 100 mg/100g before 1970, to the present level of about 5 mg/100g.

According to US 4.409.293 a method for binding a lignocellulose material using an UF adhesive system, wherein the formaldehyde emission is reduced by reducing the F:U ratio to between 1:1 and 1:2, is described. The reduction of the F:U ratio has, however, great impact on the properties of the adhesive. Generally, a adhesive having a low F:U ratio will normally result in a glue line that is more brittle than an adhesive having a higher ratio, lower quality of gluing, i.e. a higher degree of gluing defects, reduced water resistance and reduced strength as well as reduced shelf life of the adhesive. Additionally, a reduction of the F:U ratio results in a reduction of the reactivity of the adhesive, resulting in a prolonged curing time. To increase the curing speed, higher press temperature or addition of more acid or acidic components are necessary. A long curing time, and correspondingly long pressing time, is unwanted as it results in a lower production capacity of a plant. Higher pressing temperatures are unwanted due to higher energy costs and due to the increased risk of the glued product becoming more unstable (more curved). Increased addition of acid/acid components is unwanted since the increased the reactivity of the adhesive system not only shortens the curing speed but also reduces the pot life and assembly time of the system.

An alternative to reduction of the ratio F:U in the adhesive is to add scavengers binding free formaldehyde that is released during the curing of the adhesive. Depending on the type and amount of scavenger added, it can also bind free formaldehyde during the lifetime of the glued product.

It is known to reduce the emission of formaldehyde by binding free formaldehyde with urea, see i.a. US 5.684.118, which is incorporated as reference, see column 1, line 41 to 55. To reduce the emission of formaldehyde sufficiently, urea has to be added in an amount that is detrimental to the wanted characteristics of the adhesive.

In WO 02/072324, which is incorporated as reference, a method of reducing formaldehyde emission from a laminated wooden product glued with UF adhesive is described. At least one of the surfaces to be glued is in a separate step treated with a solution comprising an ammonium salt, before the adhesive is applied. Ammonium salts are known to react with free formaldehyde to bind the formaldehyde in a nonvolatile form. The ammonium salt solution may additionally comprise urea to improve the formaldehyde scavenging effect of the treatment. This method does, however, require an additional process step, adding cost to the finished product.

Use of a low molecular weight melamine urea formaldehyde adhesive as a formaldehyde scavenger is described in the above mentioned US 5.684.118, which is incorporated as reference. The fact that this adhesive has to be prepared separately makes this solution relatively costly.

Another formaldehyde scavenger is described in EP 1 291 389, which is incorporated as reference, where a polyamide, such as various proteins and other oligomeric or polymeric polyamides are added to the adhesive to reduce the formaldehyde emission. In US 2003/0099850, which is incorporated as reference, other polyamides as formaldehyde scavengers for use in formaldehyde based coating adhesives, are described. The polyamides described in US 2003/0099850 are not natural proteins, as natural proteins and longer polyamides tend to give an unwanted increase in the viscosity of the adhesive.

Resorcinol and resorcinol derivatives are known to bind formaldehyde. GB 589,131, which is incorporated as reference, describes the use a formaldehyde fixing agent, such as resorcinol, in a urea formaldehyde resin to avoid premature hardening. Resorcinol is here used to bind formaldehyde that is released from the urea formaldehyde condensation product to avoid a reaction between the ammonium that that is used as a hardener, and free formaldehyde to liberate acid that will initiate hardening of the resin.

The use of resorcinol as formaldehyde scavengers in UF adhesives is also described in "Resorcinol derivatives for scavenging formaldehyde in particleboard", M.Y. Dietrick and T.F. Terbilcox, Koppers Co., Inc., Monroeville, PA, USA, Proceedings of the Washington State University International Particleboard/Composite Materials Symposium (1983), 17th, 233-48, "Influence of different catalyst systems on the hydrolytic stability of particle boards bonded with unmodified and modified US-adhesives", T.W. Lee et al, in Holzforchung 48 (1994) Suppl., pages 101-104, and "Modifizierung von Harnstofformaldehydharzen mit Resorcin", E. Roffael in Adhäsion 1980, Heft 11, pages 422-424, which all are incorporated as reference. Resorcinol is known from the references both as a formaldehyde scavenger and as fortifier for the hardened adhesive. Addition of resorcinol during the condensation reaction for production of the UF resin does, however, lower the reactivity of the adhesive and increases the cost of the adhesive system

### Summary of the invention

An objective of the present invention is to provide a low formaldehyde emission urea formaldehyde based adhesive system for gluing of laminated wood based products. It is also an objective that the formaldehyde emission is low during the use of the adhesive system, and that the emission from the glued products is at very low levels. It is also an objective that the adhesive system fulfills practical requirements set by the industry using the adhesives and the requirements for gluing quality.

According to a first aspect, the present invention relates to an adhesive system comprising the following parts:
a) a urea formaldehyde resin adhesive part;
b) a hardener part comprising one or more curing agents(s),
c) a polymer dispersion;
d) a formaldehyde scavenger, and
e) a carboxylic acid part
wherein part d) comprises a combination of urea and resorcinol. The combination of resorcinol and urea in the formaldehyde scavenger, results in a good formaldehyde scavenging effect, without resulting in negative effects like reduced reactivity of the adhesive system, or reduced quality of gluing.

According to a first embodiment the adhesive system consists of two components:
i) an adhesive component comprising part a),
ii) a hardener component comprising part b), part c), part d) and part e).

Component ii) of a two component system comprise a carboxylic acid part e). The carboxylic acid improves the gluing quality and the water resistance of the glue line.

According to a second embodiment, the adhesive system comprises three components:
i) an adhesive component comprising part a);
ii) a hardener component comprising part b), parts of part c), and part e), and
iii) a modifying component comprising at least parts of part d) and parts of part c).

According to a further embodiment, the adhesive system comprises three components:
i) an adhesive component comprising part a);
ii) a hardener component comprising part b), and parts of part c), and
iii) a modifying component comprising at least parts of part d), parts of part c), and part e).

The carboxylic acid improves the gluing quality and the water resistance of the glue line.

According to another embodiment, at least parts of part c) is a functionalized PVAc.

According to a second aspect, the present invention relates to a formaldehyde scavenger for urea formaldehyde adhesive systems for reduction of formaldehyde emission from the glued products, wherein the formaldehyde scavenger comprises urea and resorcinol.

According to one embodiment, the formaldehyde scavenger comprises a polymer dispersion.

According to another embodiment, the scavenger additionally comprises a carboxylic acid, preferably lactic acid.

According to one embodiment, the polymer dispersion comprises a functionalized PVAc.

According to a third aspect, the present invention relates to a process for the manufacture of an adhesive system comprising parts (a) to (e) descirbed above, said process comprising the steps of providing a first component i) comprising parts a), and a second component ii) comprising part b) and at least parts of part (c), wherein the ingredients urea and resorcinol of part d) are added together or separately to the second component ii), and/or are provided as a third component iii) together with at least parts of part c), and wherein part e) is added to component ii) or component iii)..

In the present description and claims, parts and percentages are given in weight parts and % by weight, respectively, if not specifically indicated otherwise.

### Detailed description of the invention

The present invention relates to improvements in existing and traditional UF adhesive systems, where modifying ingredients are added to improve the bonding properties of the system at the same time as the formaldehyde emission is reduced. Normally, a UF adhesive system comprises two components, an adhesive component and a hardener component. The adhesive system according to the present invention may be provided as a three component adhesive system, or a two component system.

The present adhesive system comprises several parts that are combined into a two or three component adhesive system. The parts of the adhesive system are:
a) an urea formaldehyde resin adhesive part,
b) a hardener part,
c) a polymer dispersion part,
d) an urea formaldehyde scavenger part, and optionally
e) a carboxylic acid part.

### a) The urea formaldehyde resin adhesive part

The adhesive part of the present adhesive system is a urea formaldehyde (UF) or a modified UF adhesive. The adhesive part has preferably a content of solids from about 65 % to about 75 %. A preferred adhesive has content of solids of about 68-73%.

The adhesive part has a viscosity at 25 °C from about 500 to 10000 mPas, preferably from about 1000 to 4000 mPas, all for a freshly prepared adhesive, depending on the specific use. A specially preferred adhesive has a viscosity at 25 °C of 2500 to 3200 mPas. The molar ratio of formaldehyde to urea (F/U) in an unmodified UF adhesive is preferably in the range from 1,5 to 1,1. A preferred UF adhesive has a molar ratio of about 1,25 to 1,35. In a modified UF adhesive the molar ratio may be higher, e.g. up to about 2.0:1

### b) The hardener part

The hardener part of the adhesive system comprises a liquid in which one or more acid(s), acid salt(s) and /or acid generating salt(s) as active component(s) are dissolved. Preferably, the liquid in which the components are dissolved is water.

The selection of acid(s), acid salt(s) or acid generating salt(s) primarily depends on the desired characteristics for the hardener, such as how quickly it is desired that the curing takes place after the hardener and the adhesive are brought together.

Non-limiting examples of preferred acids are phosphoric acid, sulfamic acid, maleic acid, citric acid, formic acid and para-toluene sulphonic acid

Acid salts are in the context of the present invention salts that results in an acidic solution when they are dissolved in water. Non-limiting examples of acid salts are aluminium nitrate, aluminium sulphate and aluminium chloride.

Acid generating salts in the context of the present invention, are salts that react with formaldehyde in the adhesive to generate an acid. Non-limiting examples of acid generating salts are ammonium salts, such as ammonium phosphates, ammonium sulphate and ammonium chloride.

The hardener may have a pH in the range from 0 to 4, preferably from 0.5 to 3.0. To obtain the preferred characteristics, the hardener has to include an acid and an acid salt, an acid and an acid generating salt, or an acid generating salt and an acid salt. The hardener may also comprise an acid in combination with both an acid generating salt and an acid salt. The hardener may also comprise more than one acid, more than one acid generating salt and/or more than one acid salt.

The active ingredients in the hardener are combined in amounts to give the required reactivity and stability of the hardener. The reactivity is determined by the total amounts of acid, acid salts and acid generating salts. The skilled man in the art has the knowledge how to achieve both the required reactivity and the required stability. The relative amounts of the ingredients are often adjusted to the costumers needs.

### c) The polymer dispersion part

The dispersions used in the present invention is preferably a water based dispersion selected among vinyl adhesives, polyurethane and / or polyacrylate and may comprise one of the mentioned polymers or as a mixture of more than one of the mentioned polymers. The polymers have preferably a molecular weight in the range from about 2000 to about 20000, have a viscosity in the range from 5000 to 40000 mPa*s, more preferably from about 10000 to about 25000 at 23 °C, and the dispersion preferably has a content of solids from 45 to 65 % by weight.

It has been found to especially preferable to use a polyvinylacetate dispersion. Most preferably the PVAc is functionalised. Partly functionalized polymer dispersion may be obtained as such from the supplier or be prepared by mixing two or more polymer dispersions. Preferably, 40 to 100% of the polymer dispersion is functionalized.

The expression "functionalised" is in the present description and claims used in the meaning that the polymer comprises post polymerisation cross-binding groups that may cross-bind with each other or with other ingredients of the adhesive during the curing.

Cross-binding groups may be introduced into vinyl adhesives by introducing small amounts of reactive monomers such as N-methylolacrylamide or triallylcyanurate, to be polymerised with the vinyl adhesive. Polyvinylacetate (PVAc), ethylenevinylacetate and polyvinylpropionate are examples on preferred vinyl adhesives.

Preferred polymer dispersion may be emulsion adhesives, e.g. the emulsion adhesives described in US Patent No. 5.545.684. This polymer dispersion has a pH in the range 2 to 6 and comprises at least one homo- or co-polymer polyvinyl ester, and at least one polymer protective colloid.

Specially preferred as the copolymer are the copolymers that includes N-functional groups, such as (meth)arylamide, allylcarbamate, acrylonitrile, N-methylol(meth)acrylamide, N-methylolallylcarbamate, alcyl ethers and Mannich bases of N-methylol(meth)acrylamide and N-methylolallylcarbamate etc. It is preferred that the amount of these monomers is less than 15% of weight of the total amount of monomers.

The inclusion of polymer dispersion in the adhesive system improves the performance of the adhesive as it improves the characteristics of the hardened adhesive and the adhesive quality.

### d) The formaldehyde scavenging part

The UF scavenging part comprises urea and resorcinol.

Urea is added as a formaldehyde scavenger. As mentioned above, urea is a known formaldehyde scavenger that in effect reduces the F:U ratio. Earlier tests performed by the applicant have shown that addition of urea in the adhesive results in undesirable effects. Addition of urea to the adhesive immediately before application of the adhesive results in fewer undesirable effects than addition of urea to the adhesive before delivery to the costumer. Additionally, it has been surprisingly found that addition of urea together with resorcinol and polymer dispersion results in a lower degree of unwanted effects than addition of urea alone. The amount of urea preferably constitutes from about 1 to about 15 % by weight of the adhesive system, more preferably from about 3 to about 10 % by weight.

The present inventors have found that the formaldehyde scavenging effect of urea is reduced during storage of an aqueous solution of UF resin and urea. Accordingly, urea is preferably mixed with the adhesive part shortly before, such as the same day, or during the application of the adhesive to the substrate to be glued. As mentioned above, addition of urea is known to reduce the reactivity of a UF adhesive system. The present inventors have also surprisingly found that this effect is substantially reduced if urea is combined with the UF resin immediately before use of the adhesive system, i.e. within the same day or within a few hours to a few minutes before application.

Resorcinol is added both as a formaldehyde scavenger and to improve the performance of the cured adhesive. As mentioned above, resorcinol and resorcinol derivatives are known as formaldehyde scavengers, additionally resorcinol is known as a fortifier for UF and MUF adhesives. The amount of resorcinol in the adhesive system is preferably from about 1 to about 15 % by weight, more preferably from about 3 to about 10 % by weight of the adhesive system. The present inventors have found that the formaldehyde scavenging effect of resorcinol is reduced during storage of an aqueous solution of UF resin and resorcinol. As mentioned above, addition of resorcinol is known to reduce the reactivity of a UF adhesive system. The present inventors have also surprisingly found that this effect is substantially reduced, and addition of resorcinol may even increase the reactivity of the adhesive system, if resorcinol is combined with the UF resin immediately before use of the adhesive system, i.e. within the same day or within a few hours to a few minutes before application.

### e) The carboxylic acid part

The carboxylic acid is added to improve the properties of the glue line and to stabilize the modifier or hardener to improve the shelf life thereof. Non-limiting examples on useful carboxylic acids are formic acid, acetic acid, and lactic acid. Lactic acid is a preferred carboxylic acid as it is odorless. If higher reactivity is required, other acids may be preferred. The amount of acid may vary depending on the choice of other components, the choice of acid and the wanted reactivity of the adhesive system. The amount of acid may vary from 0 to about 3 % by weight, preferably from about 1 to about 2 % by weight of the adhesive system. The carboxylic acid may be included in the hardener part or in a separate modifier part.

### The adhesive system

The adhesive system is made by combining the parts a) to d) and part e) into a two or three component adhesive system depending on the user's demands and/or preferences. The preferences and/or demands of the user may be determined by the method for application of the adhesive system, the required pot life for the adhesive system or mixture of the parts of the adhesive system, the required reactivity of the adhesive system etc. The skilled man in the art will understand that the ingredients of the different parts have to be selected to the intended use and the intended combination of parts to avoid any unwanted reactions or incompatibility between components after mixing the parts a) to e) into the components of the adhesive system.

### Two component adhesive system

A two component adhesive system consists of two components;
i) an adhesive component, and
ii) a hardener component.

As mentioned above, some of the modifying ingredients may not be included, or are preferably not included in the adhesive component i) as it may result in instability, incompatibility and/or unwanted reactions According to a preferred embodiment, the adhesive component i) comprises part a), and the hardener component comprises the parts b) to d) and part e).

### Three component adhesive system

A three component system adhesive system consists of three components;
i) an adhesive component,
ii) a hardener component, and
iii) a modifying component.

In a three component adhesive system, the adhesive component i) preferably comprises part a), the hardener component b) preferably comprises part b) and parts of part c), whereas the modifying component iii) preferably comprises part d) in addition to parts of part c). Acarboxylic part e) is included in the hardener component ii) or in the modifying component iii).

A separate modifying component iii) makes it possible for the user to purchase standard adhesive and hardener, and modify the system for specific uses by means of different modifying components iii) having different concentration of the components described herein.

To achieve a sufficient concentration of some of the ingredients in the adhesive system, some of the ingredients may be included in more than one component i) to iii). As indicated above parts of part c) may be included both in component ii) and iii) in a three component system. Additionally, parts of the urea and/or resorcinol may be added to the hardener component ii) of a three component system to avoid increasing the volume of the modifying component iii). The carboxylic acid part e) is added to either the hardener component ii) or the modifying component iii) in a three component system.

Both a two and three component system may be applied to the surfaces to be glued separately or premixed. A two component system may be applied by separate application of both components by means of any of the methods for separate application that are known for the skilled man in the art, or may be premixed and applied by any known method for application of a one component or premix adhesive system.

A three component system may be applied to a substrate by separate application of all three components, by premixing component i) and component iii) and apply the resulting adhesive system as a two component system comprising a hardener component ii) and the combined component i) and iii). A three component adhesive system may also be premixed by mixing all components i), ii) and iii) and apply the resulting mixture to the substrate.

The concentration of the different ingredients of the parts a) to e) in the total adhesive system is of vital importance. The concentration of the ingredients in the different components has to sufficient to give the intended resulting concentration adhesive mixture. The preferred concentration of the different ingredients in the adhesive system is given above under the discussion of the part a) to e).

The polymer dispersion, or parts thereof, may also be added to the hardener. The polymer dispersion and the adhesive part can be mixed, but the shelf life of such mixtures are short hence it is not a viable solution. It is therefore preferred that the modifier is added to the adhesive part by the user immediately before application, and not before delivery.

Presently, it is preferred of technical reasons to provide adhesive systems according to the invention for separate application, as three component systems. The three component system may be applied as three separate components e.g by application of strings. If the parts are to be applied by means of rollers, the hardener is usually applied firstly. To avoid transfer of hardener from the substrate to the roller for adhesive application, the layer of hardener applied to the substrate has to be thin. Accordingly, the volume of the hardener part has to be low.

The modifier may alternatively be mixed with the adhesive part before the application. To avoid unwanted reactions between the adhesive component i) and the modifier component iii), the mixing of the two parts is preferably performed immediately before application. Immediately before application is here intended to mean within a few minutes to a few hours before application.

For mix in adhesive systems, i.e. adhesive systems where the components of the adhesive are combined and mixed before application to a substrate to be glued, relative volumes of the components to be mixed is of no relevant. The relevant question is the concentrations of the different ingredients in the final mixture.

### Test methods

Test specimens produced in the Examples below, were tested for bond quality and emission of formaldehyde according to the following standard tests.

Initially, a test according to EN 12765 was performed to verify that the gluing results were acceptable. Adhesive mixtures that did not produce test specimens that passed this test were not used for further testing.

### Test according to EN 12765: 2001, issued by European Committee for Standardization (CEN)

The gluing quality according to durability class C3 was tested. This test comprises three conditioning sequences, dry, cold water and warm water. In all tests the adhesive strength was measured in N/mm².

For the dry test, samples were conditioned for 7 days in standard atmosphere (20±2 °C and 65±5% relative humidity) before measurement of the adhesive strength. For the cold water test, the samples were conditioned for 7 days in standard atmosphere and thereafter immersed for one day in water at 20±5 °C before measurement of adhesive strength. For the warm water test, the samples were conditioned for 7 days in standard atmosphere and thereafter immersed for three hours in water at 67±2 °C and then cooled down for two hours in water at 20 ±5 °C, before measurement of adhesive strength. The requirements for the durability class C3 are an adhesive strength of ≥ 10 N/mm² in the dry tests 7 N/mm² in the cold water test and ≥ 4 N/mm² in the warm water test.

The emission of formaldehyde was tested as follows:

### 1) Chamber emission test according to EN 717-1

The test samples were placed back to back, edge sealed as described in the standard, wrapped airtight, and shipped to Dansk Teknologisk Institutt (DTI) for testing according to EN 717-1. The standard EN 717-1:2004, issued by European Committee for Standardization (CEN), is included as reference in the present description. The area of the test specimens were corresponding to a total loading rate (i.e. the ratio of test sample surface area excluding the are of the edges, to the volume of the chamber in m²/m³) of 1 m²/m³, and placed in a chamber having a volume of 225 liters, at 23±0,5 °C, at a humidity of 45 ±3% RH, with an air exchange rate of once per hour, for 9 or 21 days, respectively.

The steady state formaldehyde concentration in the chamber obtained under these conditions was measured by drawing air from the chamber through washing bottles containing water absorbing the formaldehyde. The formaldehyde content of the aqueous solutions was measured photometrical by the acetyl acetone method, to give results in mg/m³.

The requirements for an E1 classification according to EN 717-1 is an emission lower than 0,124 mg/m³.

### 2) Desiccator -test according to JANS 16

The standard, JANS 16:1998, issued by the Joint Japan, Australia and New Zealand Standards Harmonisation Committee, is included as reference in the present description.

Un-lacquered test samples was cut and placed in a desiccator together with a dish with distilled water, in the applicant's conditioning room at a temperature of 20±0,2 °C. The amount of formaldehyde absorbed by the distilled water was determined by the acetyl acetone method to give results in mg/l.

To pass the requirements for F**** according to JANS 16, the mean value for formaldehyde emission from parallel test must not exceed 0,3 mg/l, and no single result may be higher than 0,4 mg/l.

### Testing of the bond quality

### Knife test

The gluing quality was assessed by inserting a knife into a glue line to split the surface layer from the core layer. The resulting fracture surface was visually inspected and fracture of the wood of the core layer vs. fracture in the glue line as such was assessed by visual inspection of the fracture and the glue line. Results are given in % wood fracture, where 100 % wood fracture indicates a glue line of good quality as there is no fractures in the glue line as such.

Values above 60% are acceptable and values above 80% are very good.

### Japanese Agricultural Standard (JAS) for plywood for general use, type II and III

### Type II - immersion delamination test

Test samples of three layered parquet cut a size of 75x75 mm were immersed in hot water at temperatures of 70±3 °C for 2 hours and dried in an oven at a temperature of 60±3 °C for three hours before the glue line was investigated for openings / delamination.

### Type III - immersion delamination test

Test samples of three layered parquet cut a size of 75x75 mm were immersed in water at temperatures of 35±3 °C for 2 hours and dried in an oven at a temperature of 60±3 °C for three hours before the glue line was investigated for delamination.

For both type II and type III delamination is measured in mm. To pass the tests the delamination must not exceed 1/3 of the glue line for each side, or 25 mm for the test samples used for these tests.

### Test for shear strength according to EN 13354:2000, issued by European Committee for Standardization (CEN)

Test samples were tested for shear strength as described in EN 13354. The length and width of the shear area was determined before pretreatment. Test specimens were tested untreated, i. e. without any pre-treatment, after 24 h in water and after 24 hours in water and thereafter drying in an incubator at 35 °C for a week.

The test specimens were positioned in the shearing tool and a shearing force was applied parallel to the adhesive line. The maximal load at failure was noted and shear strength was calculated in N/mm². Additionally, the % wood failure was calculated.

To pass the test, the lower 5-percentile of the shear strength calculated in accordance with EN 326-1 shall not be less than 08 N/mm2. The mean percentage wood failure of each panel shall be more than 40%.

### Examples

With exception of Example 1, which was performed in the applicant's laboratory, all the tests in the Examples were performed in a regular production line.

The present invention will be further described by means of the following non-limiting examples. Even though only a limited field of use for the present adhesive system and modifier is described, the skilled man in the art will understand that the present gluing system and modifier may be used for different gluing operations and for production of different kind of products. The present gluing system and modifier, without limitations, may thus be used for foliation of wood based products, veneering, in addition to different kinds of lamination, such as production of parquet, plywood, curved plywood, solid wood lamination, and production of beams.

The application method for adhesive and hardener is indicated for all examples. The modifier was mixed with the adhesive as indicated in each example. The substrates to be tested are described in the examples, however, for the examples relating to laminated parquet boards, the boards have a total thickness of 14 mm, comprising a 4 mm surface layer of hardwood, a 8 mm spruce core layer, and a 2 mm spruce backing veneer. The test specimens were produced as 5 layered lamella parquet having a 10 mm surface layer in the middle, a core layer at each side of the surface layer and a backing veneer at each side. After gluing the surface layer was split and planed to give two laminated parquet boards. The surface layer was made of beech, oak or merbau, as indicated in the examples.

After application of adhesive and hardener, the test samples were layered to build up the layered structure as described above for parquet, and introduced to a radio frequency (RF) lamination press where the test specimens were heated by means of high frequency electric power. The heating time is given in the tables below as "RF time". The time after application of heat before the pressure is released and the test specimen is removed from the press, is in the tables referred to as "Post-curing time".

### Ingredients

The composition of the modifiers and hardeners are given in the following tables 1 and 2

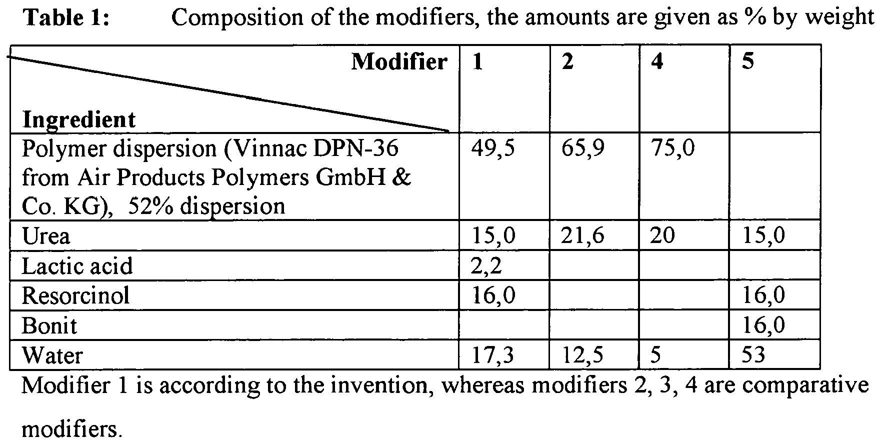

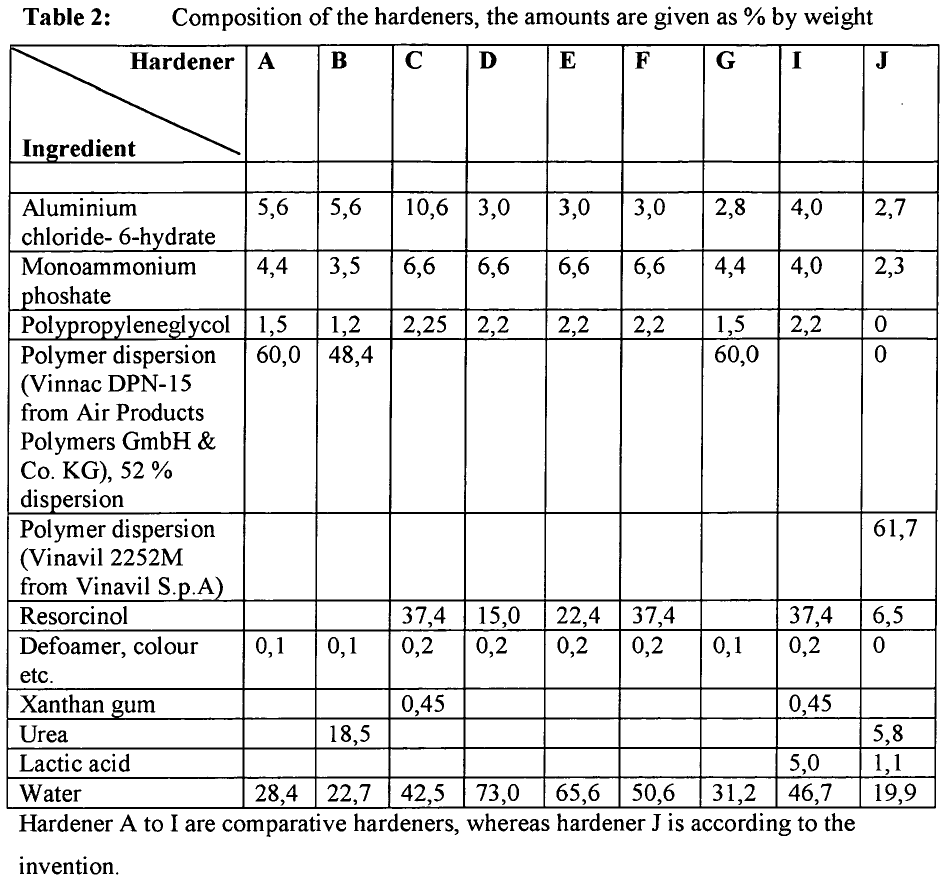

### Example 1- shear strength test of glued specimens

Gluing tests with hardeners with different resorcinol content were performed to see how much of the relatively expensive resorcinol that had to be added to the adhesive mixture. Additionally, the effect of addition of lactic acid was tested.

Test specimens of beech, 5 mm thick, was glued together and tested for shear strength according EN 12765:2001, as described above.

The mixture of adhesive and any modifier was mixed with hardener before application of about 150 g/m² on one side. After a closed assembly time of 2 minutes the test specimens were pressed in a hot press at 100 °C and a pressure of 10 kp/cm².

The adhesive Prefere® 4108 was used for all tests. The modifier, the hardener and the parts of each mixture, are given in table 3 below, whereas the results from the shear strength test according to EN 12765, are given i table 4 below.

**Table 3 -Amounts of modifier and hardener in the used adhesive mixes**

| Mixture | Modifier | Hardener | Parts by weight (adhesive/modifier + hardener |
|---|---|---|---|
| 1 (comparative) | Modifier 2 | D | 100/18,5 + 13,3 |
| 2 (comparative) | Modifier 2 | E | 100/18,5 + 13,3 |
| 3 (comparative) | Modifier 2 | F | 100/18,5 + 13,3 |
| 4 (comparative) | Modifier 4 | F | 100/20 + 13,3 |
| 5 (comparative) | - | G | 100/- + 13,3 |
| 6 (inventive) | Modifier 2 | I | 100/18,5 + 13,3 |

**Table 4 - Results from shear strength test according to EN 12765**

| **Adhesive mixture** | **Dry test** | **Cold water test** | **Warm water test** |
|---|---|---|---|
| | N/mm² % WF * | N/mm² % WF | N/mm² % WF |
| 1 (comparative) | 14,1 100 | 6,0 0 | 1,2 0 |
| 2 (comparative) | 14,8 76 | 7,2 0 | 2,6 3 |
| 3 (comparative) | 10,7 100 | 7,5 32 | 3,5 0 |
| 4 (comparative) | 12,9 80 | 6,5 18 | 4,4 0 |
| 5 (comparative) | 14,7 100 | 8,7 98 | 6,6 5 |
| 6 (inventive) | 13,7 100 | 7,8 74 | 7,2 30 |
| **Requirements** | **10** | **7** | **4** |

| | | | |
|---|---|---|---|
| *) WF is Wood Failure | | | |

The results above clearly show that the water resistance is reduced as the level of resorcinol is reduced. The reference adhesive mixture, mixture 5, and mixture 6 give better results than the other mixtures. It is, however, known that the reference mixture will not fulfill the requirements for low formaldehyde emission. Both the reference and mixture 6 fulfills the requirements for shear strength in all three tests with good margin.

These tests clearly illustrates that a high level of resorcinol is necessary to give the required quality of the glue line. The tests does also illustrate that inclusion of lactic acid improves the glue line substantially.

### Example 2 (Comparative)- bond quality and emission gluing with standard glue system Prefere ® 4108/5100 (Reference Example)

Prefere® 4108 a urea formaldehyde adhesive, and Prefere ® 5100 hardener (hardener A), both from Dynea Chemicals OY, is a standard glue system used for production of parquet by RF pressing. The following example will describe a standard gluing process using this glue system.

The adhesive and hardener are applied by means of rollers for separate application. Typical values for adhesive and hardener application spread are given in the table below. The necessary heating time (RF time) and pot curing time depend on the RF press used as well as the wood species of the surface layer. Typical values for the RF press used in the examples in the present description are also given in the table below as well as typical surface temperatures of the different wood species after coming out of the press.

Evaluation of bond quality is done as described for the knife test.

**Table 5. Typical values**

| Application rates | RF-time | Post curing time | Surface layer | Evaluation of gluing quality (typical values for the different wood species) |
|---|---|---|---|---|
| 20 to 35 g/m² of hardener, 130 to 150 g/ m² of adhesive | 19-21spec | 10-12 sec | Beech | 60-80 % wood failure |
| | | | Oak | 70-100 % wood failure |
| | | | Merbau | 70-100 % wood failure |

Typical formaldehyde emission from samples produced using Prefere ® 4108 and hardener A, as described above, was measured according to EN 717-1 and JANS 16. The results are found in table 6 below.

**Table 6: Formaldehyde emission results**

| **Test method** | **Surface of specimen** | **Typical result** |
|---|---|---|
| Chamber (EN 717-1) | Un-Lacquered | 0,06 mg/m³ |
| | Lacquered | 0,04 mg/m³ |
| Desiccator (JANS 16) | Lacquered and unlacquered | 1,0-1,2 mg/l |

### Example 3 (Comparative)- formaldehyde emission from wood and un-glued parquet

To determine the approximate level of formaldehyde emission from the wood it selves the formaldehyde emission from un-lacquered and un-glued parquet as well as from planed oak lamellas were measured according to EN 717-1. The unglued parquet was held together with staples. The results are found in table 7 below.

**Table 7: Formaldehyde emission results**

| **Sample** | **Result** |
|---|---|
| Un-lacquered, un-glued parquet with oak surface, spruce core and spruce veneer | 0,0173 mg/m³ |
| Lacquered, un-glued parquet with oak surface, spruce core and spruce veneer | 0,0080 mg/m³ |
| Planed oak lamellas | 0,0124 mg/m³ |

Table 7 illustrates that the wood itself will emit some formaldehyde and the level of this emission. It also shows that lacquering reduces the emission. Use of different wood species as surface layer, core layer and backing veneer will have an effect on the formaldehyde emission from the finished parquet. This is due to differences in the formaldehyde content of the wood species as well as the ease of which formaldehyde penetrates though the different wood species. Less formaldehyde will penetrate through a surface layer of a high density wood species compared to a low density wood species.

### Example 4 (Comparative) - gluing test with and without resorcinol

A gluing test was performed using Prefere® 4108 a urea formaldehyde adhesive, and harderer B (part 1 of the test). A further gluing test was done using Prefere 4108 premixed with modifier 2 and hardener C (part 2 of the test). The mixing ratio of Prefere 4108 and modifier 2 was 100 parts by weight to 18,5 parts by weight. The test was performed in the same production equipment as used in Example 2. The parquet made in these tests had beech surface layer. The adhesive, or adhesive pre-mix in case of test 2, and hardener were applied by means of rolls for separate application. The application was about 140-150 g/m² of adhesive and about 20-25 g/m² of hardener. The heating time (RF time) in the press was 22 seconds, and the post heat curing time was 10 seconds for test 1 and 24 sec. RF time and 10 sec. post heat curing time in test 2.

A specimen, specimen A, was picked out for test of bond quality and emission testing (chamber emission test and test according to JANS 16) of lacquered and un-lacquered specimens from test 1.

The second specimen, specimen B, was picked out from part 2 of the test for test of bond quality and emission testing (chamber emission test and test according to JANS 16) of lacquered and un-lacquered specimens.

The bond quality of test samples produced above was evaluated and the formaldehyde emission from the test samples was measured according to EN 717-1 and JANS 16. The results are found in table 8 below.

**Table 8: Formaldehyde emission results**

| **Test method** | **Surface of specimen** | **Results** | |
|---|---|---|---|
| | | **Specimen A** | **Specimen B** |
| Evaluation of bond quality | | 30-40 % Wood failure | 60-70% Wood failure |
| | | | |
| Chamber (EN 717-1) | Un-lacquered | 0,0445 mg/m³ | 0,0215 mg/m³ |
| | Lacquered | 0,0140 mg/m³ | 0,0085 mg/m³ |
| Desiccator (JANS 16) | Un-lacquered | 0,832 mg/l | 0,592 mg/l |

Delamination tests showed that the bond quality of the parquet made in the two tests was not as good as for Prefere ® 4108 and hardener A (as described in example 2). This reduction of the gluing quality as due to a reduced F:U ratio was expected. It was, however, surprising that specimen B (glued with the pre-mix of Prefere 4108/modifier 2 and hardener C) had significantly better bond quality than specimen A (using Prefere 4108 and hardener B).

Both the chamber test according to EN 717-1 and the desiccator test showed that both test specimen A and B had a lower formaldehyde emission than the standard system (Prefere® 4108 / hardener A), where the lowest emission was observed for test specimen B. The emission for the lacquered test specimen B was very close to the results for the lacquered, unglued sample in example 4, i.e. the formaldehyde emission was close to the emission from unglued wood.

As a conclusion, both test specimens A and B had lower formaldehyde emission than the standard system, a result that was expected due to the inclusion of urea as a formaldehyde scavenger. Test specimen B had, however, test results both for formaldehyde emission and gluing quality that was substantially better than for test specimen A. Accordingly, resorcinol seemed to improve both gluing quality and formaldehyde emission and seemed to be necessary to fulfill the requirements both for gluing quality that are demanded by the costumers and the requirements to reduce the formaldehyde emission. The adhesive system including resorcinol was therefore the preferred system, even if resorcinol is expensive and adds cost to the adhesive system.

### Example 5 (According to the invention)- Gluing test on different substrates

Tests were performed using Prefere® 4108 adhesive, modifier 1 and hardener A. Additional test was performed using modifier 5 where PVAc is substituted by an organic filler known to give good gluing, Bonit® (Wetzel GmbH & Co KG, Germany), and water.

To give the adhesive pre-mix more time to penetrate into the wood, hardener A, having a lower reactivity than the hardener C used in Example 4 (comparative), was used. The surface layer was made of beech, oak or merbau, as indicated in the tables.

The hardener application was 25-30 g/m² and the glue application was 140-150 g/m2.

**Table 9 - According to the invention, modifier 1 and Hardener A**

| Surface layer | RF-time | Post curing time | Evaluation of bond quality |
|---|---|---|---|
| Beech | 17 sec | 13 sec | 100 % wood failure |
| Oak | 17 sec | 13 sec | 70-100 % wood failure |
| Merbau | 17 sec | 13 sec | 80-100 % wood failure |

As illustrated in the table very good bonding was obtained in this test. It was surprising to find that the gluing results were comparable with or even better than the results obtained in the reference Example 2, even with shorter RF times. Contrary to what was expected, the reactivity of the adhesive system seemed to be at the same level or even higher than what was observed in Example 2.

A further test where the modifier was substituted by a less expensive modifier, modifier 5, wherein PVAc was substituted with Bonit® and water, was performed. The adhesive and modifier was mixed in the ratio 100/20 to give an adhesive premix. The results from this test are given in table 10, below.

**Table10. Test of modifier 4 (comparative),**

| Surface layer | RF-time | Post curing time | Evaluation of bond quality |
|---|---|---|---|
| Beech | 21 sec | 9 sec | 100 % wood failure |
| Oak | 21 sec | 9 sec | 60-70 % wood failure |
| Merbau | 17 sec | 13 sec | 60-70 % wood failure |

Table 10 illustrates that the reactivity of this adhesive system was higher than in example 2.

The results from this tests confirms that the quality of gluing achieved with Prefere® 4108 adhesive, modifier 1 and hardener A in production of parquet was at least as good as with the standard system, i.e. Prefere 4108 adhesive and hardener A. The gluing achieved in this test for modifier 5, without PVAc, is good, but not as good as for the modifier 1, with PVAc.

### Further test of selected test specimens

Selected test specimens glued with Prefere® 4108 / modifier 1 and hardener A, and with the reference system, i.e. Prefere® 4108 and hardener A, were tested further.

The reference specimen, having a merbau surface layer, was taken from normal production with the reference adhesive system. For the testing of bond quality the test specimen H and I, both having merbau surface layer were used. Samples for test of formaldehyde emission were also collected (specimen J, K, L). All the specimens were collected from different parquet boards.

The quality of gluing was tested according to JAS type II and III, and drying / delamination and shear strength test according to EN-13354. Formaldehyde emission was tested according to JANS 16. The results from the tests are given in tables 11, 12, 13, 14 and 15, below.

**Table 11 Results from test according to JAS type II**

| **Test** | **Ref.** | **Specimen H (inventive)** |
|---|---|---|
| 1, surface layer | 0-0-0-0 | 42-0-0-27 |
| 1, backing veneer | 75-75-75-75 | 15-0-0-10 |
| Result** | OK/ - | -/ OK |
| | | |
| 2, surface layer | 0-0-0-0 | 0-0-0-0 |
| 2, backing veneer | 68-75-75-75 | 0-0-0-0 |
| Result** | OK/ - | OK |

| | | |
|---|---|---|
| ** results are indicated as OK or - (not OK) for surface layer / backing veneer | | |

The gluing between the backing veneer and core layer seems to be better using the present adhesive system than the reference adhesive system.

**Table 12 Results from test according to JAS type III**

| **Test** | **Ref.** | **Specimen H (inventive)** | **Specimen I (inventive)** |
|---|---|---|---|
| 1, surface layer | 0-0-0-0 | 0-0-0-0 | 0-0-0-0 |
| 1, backing veneer | 0-0-0-0 | 0-0-0-0 | 0-0-0-0 |
| Result** | OK | OK | OK |
| | | | |
| 2, surface layer | 0-0-0-0 | 0-0-0-0 | 5-0-0-0 |
| 2, backing veneer | 0-0-0-0 | 0-0-0-0 | 0-0-0-0 |
| Resultat** | OK | OK | OK |

| | | | |
|---|---|---|---|
| ** results are indicated as OK or- (not OK) for surface layer / backing veneer | | | |

All the test specimens fulfilled the requirements according to JAS III with good margin.

### 3) Heat/ delamination test

A 5 cm wide strip was cut and placed in an oven at 100 °C for 30 minutes, before evaluation of delamination. The results are given in mm and %.

**Table 13 Results from heat / delamination test**

| **Test** | **Ref.** | **Specimen H** |
|---|---|---|
| mm delam. | 0 | 0 |
| % delam | 0% | 0% |

There were no delamination neither for the reference nor for the test specimen.

### 4) Shear strength according to EN-13354

**Table 14 Results in N/ mm² and % wood fracture (WF) (mean values):**

| Test | Reference | | Specimen H | | Specimen I | |
|---|---|---|---|---|---|---|
| | N/mm² | % WF | N/mm² | % WF | N/ mm² | %WF |
| Dry | 6,28 | 95 | 6,05 | 91 | 6,64 | 89 |
| 24 h water | 2,04 | 63 | 3,05 | 80 | 2,39 | 63 |
| One week at 35 °C | 4,06 | 94 | 4,19 | 81 | 3,91 | 66 |

The differences between the three tests were relatively small, and the bond quality was not reduced compared with the reference system.

### 5) Desiccator test according to JANS 16

Test samples was cut in the correct dimensions for testing and conditioned in a conditioning room at 20 °C and a humidity of 65% in cleaned air for 5 to 6 days before testing in an desiccator in the applicant's laboratory.

**Table 15 Results from JANS 16 of test samples**

| **Test** | **Surface layer (un-lacquered)** | **Emission** |
|---|---|---|
| Specimen J | Beech | 0,67 mg/ l |
| Specimen K | Oak | 0,64 mg/ l |
| Specimen L | Oak | 0,52 mg/ l |

The test results were very promising, thus a more extensive test was performed to confirm the good gluing quality and the low emission result. This is described in the following example 6.

### Example 6 (inventive)

In all tests in this example, 100 parts of the adhesive part, Prefere® 4108 adhesive and 20 parts of modifier 1 were mixed manually to produce a premix, before this premix was introduced into the roller spreader for the adhesive part. About 21 - 23 g/m² of the hardener A and about 140 g/m² of the premix were applied by means of standard roller spreaders to the surfaces.

After application of hardener and premix to the surfaces to be glued, the test specimens were pressed and heated in the standard production RF press. The RF time was adjusted to 19 seconds and the post press time was 10 seconds. The results of the bond quality tests are found in table 16, below.

**Table 16 Assessment of the bond quality for parquet with surface layer of oak, beech and merbau**

| Type of wood | Bond quality the day after pressing |
|---|---|
| Oak | 80-100 % wood failure |
| Beech | 70-90 % wood failure |
| Merbau | 90-100 % wood failure |

All test samples showed very good bond quality.

Samples from the test production were tested for formaldehyde emission according to JANS 16 and EN 717-1. The results are given in table 17 below. Before the test the test samples were conditioned in a chamber with 1 m³ purified air at 20 °C and a relative humidity of 65%.

**Table 17. Results from JANS 16 and EN 717-1 test for formaldehyde emission**

| | Surface layer | Surface treatment | Results |
|---|---|---|---|
| JANS 16 | Oak | Un-lacquered | 0,39 mg/ l |
| EN 717-1 | Merbau | Un-lacquered | 0,015 mg/m³ |

### Example 7

Test samples of edge glued boards having a thickness of 21 mm were produced using a two component system according to the present invention. The test boards were compared with standard production edge glued boards from the same production facility.

The test boards were glued with a standard UF resin adhesive, Prefere® 4134 from Dynea OY and hardener B, being a combined hardener and modifier. The test boards were compared with boards glued with the UF resin adhesive Prefere® 4580 and hardener Prefere® 5109, both from Dynea OY. The test samples where produced from lamellas having a width of 45 mm, whereas the comparison sample was made from lamellas having a width of 42 mm.

The adhesive part and the hardener part of the adhesive systems were mixed before application. Prefere® 4134 and Hardner J were mixed in a ratio of 100/50, whereas Prefere ® 4580 and Prefere® 5109 were mixed in a ratio of 78/22. After application of the glue the lamellas, the lamellas were brought together and pressed at a temperature of 120 °C. The two test samples were pressed for 100 and 121 seconds, respectively, whereas the comparison sample was pressed for 121 seconds. After pressing the two test samples were left for 30 minutes before they were wrapped into plastic. The comparison sample was wrapped into plastic after an unknown time (substantially longer than 30 minutes). The wrapped samples were transported to the applicants laboratory, cut into test pieces of 5 x 15 cm, each having two longitudinal glue lines and tested in a desiccator test according to JANS 16.The emission test results are found in table 18 below.

**Table 18. Emission test results**

| Test sample | Pressing time (sec) | Emission test results (mg/l) |
|---|---|---|
| Test sample a) (inventive) | 121 | 0,33 |
| Test sample b) (inventive) | 100 | 0,25 |
| Comparison sample | 121 | 0,79 |

As shown in table 18, the formaldehyde emission from both test sample a) and b) were substantially lower than the emission from the comparison sample. The comparison sample was stored longer than the test samples before it was wrapped into plastic. According to the experience of the applicant this will normally lower the emission test results. Accordingly, it is expected that the emission test results for the comparison sample would have been higher if it had been treated as the test samples The fact that thinner lamellas are used in the reference comparison example than in test sample a) and b) is not expected to have any influence on the emission results.

It is also observed from the table that the test samples seems to pass the requirements for F**** (max value of 0,4 mg/l, average 0,3 mg/l).

## Claims

1. An adhesive system comprising the following parts:
a) a urea formaldehyde resin adhesive part;
b) a hardener part comprising one or more curing agents(s),
c) a polymer dispersion;
d) a formaldehyde scavenger,
e) a carboxylic acid part
wherein part d) comprises a combination of urea and resorcinol.

2. The adhesive system according to claim 1_{;} wherein the adhesive system consists of two components:
i) an adhesive component comprising part a),
ii) a hardener component comprising part b), part c), part d) and part e).

3. The adhesive system according to claim 1, wherein the adhesive system comprises three components:
i) an adhesive component comprising part a);
ii) a hardener component comprising part b), parts of part c) and part e), and
iii) a modifying component comprising at least parts of part d) and parts of part c).

4. The adhesive system according to claim 1, wherein the adhesive system comprises three components:
i) an adhesive component comprising part a);
ii) a hardener component comprising part b), and parts of part c), and
iii) a modifying component comprising at least parts of part d), parts of part c) and part e).

5. The adhesive system according to any of the claims 1 to 4, wherein at least parts of part c) is a functionalized PVAc.

6. A formaldehyde scavenger for urea formaldehyde adhesive systems for reduction of formaldehyde emission from the glued products, wherein the formaldehyde scavenger comprises urea, resorcinol and a carboxylic acid.

7. The formaldehyde scavenger according to claim 6, wherein the formaldehyde scavenger comprises a polymer dispersion.

8. The formaldehyde scavenger according to claim 6 or 7, wherein the carboxylic acid is lactic acid.

9. The formaldehyde scavenger according to any of the claims 6 to 8, wherein the polymer dispersion comprises a functionalized PVAc.

10. A process for the manufacture of an adhesive system comprising parts a) to e) according to any of the claims 1 to 5, said process comprising the steps of providing a first component i) comprising parts a), and a second component ii) comprising part b) and at least parts of part c),
wherein the ingredients urea and resorcinol of part d) are added together or separately to the second component ii), and/or are provided as a third component iii) together with at least parts of part c), and wherein part e) is added to component ii) or component iii).

## Patentansprüche

1. Klebstoffsystem, umfassend die folgenden Elemente:
a) ein Haftelement aus Harnstoff-Formaldehydharz
b) ein Härterelement, das eine oder mehrere Härtemittel umfasst,
c) eine Polymerdispersion;
d) einen Formaldehyd-Scavenger,
e) ein Carboxylsäureelement,
wobei Element d) eine Kombination aus Harnstoff und Resorcinol umfasst.

2. Klebstoffsystem nach Anspruch 1, wobei das Klebstoffsystem aus zwei Komponenten besteht:
i) einer Haftkomponente, die Element a) umfasst,
ii) einer Härterkomponente, die Element b), Element c), Element d) und Elemente e) umfasst.

3. Klebstoffsystem nach Anspruch 1, wobei das Klebstoffsystem drei Komponenten umfasst:
i) eine Haftkomponente, die Element a) umfasst,
ii) eine Härterkomponente, die Element b), Teile von Element c) und e) umfasst, und
iii) eine Modifikatorkomponente, die zumindest Teile von Element d) und Teile von Element c) umfasst.

4. Klebstoffsystem nach Anspruch 1, wobei das Klebstoffsystem drei Komponenten umfasst:
i) eine Haftkomponente, die Element a) umfasst,
ii) eine Härterkomponente, die Element b), und Teile von Element c) umfasst, und
iii) eine Modifikatorkomponente, die zumindest Teile von Element d), Teile von Element c) und Element e) umfasst.

5. Klebstoffsystem nach einem der Ansprüche 1 bis 4, wobei zumindest Teile von Element c) ein funktionalisiertes PVAc ist.

6. Formaldehyd-Scavenger für Harnstoff-Formaldehyd-Klebstoffsysteme zur Verringerung der Formaldehydemission aus geklebten Produkten, wobei der Formaldehyd-Scavenger Harnstoff, Resorcinol und eine Carboxylsäure umfasst.

7. Formaldehyd-Scavenger nach Anspruch 6, wobei der Formaldehyd-Scavenger eine Polymerdispersion umfasst.

8. Formaldeyhd-Scavenger nach Anspruch 6 oder 7, wobei die Carboxylsäure Milchsäure ist.

9. Formaldehyd-Scavenger nach einem der Ansprüche 6 bis 8, wobei die Polymerdispersion ein funktionalisiertes PVAc umfasst.

10. Verfahren zum Herstellen eines Klebstoffsystems, das Elemente a) bis e) nach einem der Ansprüche 1 bis 5 umfasst, wobei das Verfahren die Schritte des Bereitstellens einer ersten Komponente i), umfassend Element a), und einer zweiten Komponente ii), umfassend Element b) und zumindest Teile von Element c), umfasst,
wobei die Inhaltsstoffe Harnstoff und Resorcinol von Element d) gemeinsam oder getrennt zur zweiten Komponente ii) hinzugefügt werden und/oder als dritte Komponente iii) gemeinsam mit zumindest Teilen von Element c) bereitgestellt werden, und wobei Element e) zur Komponente ii) oder zur Komponente iii) hinzugefügt wird.

## Revendications

1. Système adhésif comprenant les parties suivantes :
a) une partie adhésive constituée d'une résine urée-formaldéhyde ;
b) une partie constituée d'un durcisseur comprenant un ou plusieurs agents de durcissement,
c) une dispersion de polymère ;
d) un piégeur de formaldéhyde,
e) une partie constituée d'acide carboxylique
dans lequel la partie d) comprend une combinaison d'urée et de résorcinol.

2. Système adhésif selon la revendication 1, le système adhésif étant constitué de deux composants :
i) un composant adhésif comprenant la partie a),
ii) un composant durcisseur comprenant la partie b), la partie c), la partie d) et la partie e).

3. Système adhésif selon la revendication 1, le système adhésif comprenant trois composants :
i) un composant adhésif comprenant la partie a) ;
ii) un composant durcisseur comprenant la partie b), des parties de la partie c) et la partie e), et
iii) un composant modificateur comprenant au moins des parties de la partie d) et des parties de la partie c).

4. Système adhésif selon la revendication 1, le système adhésif comprenant trois composants :
i) un composant adhésif comprenant la partie a) ;
ii) un composant durcisseur comprenant la partie b) et des parties de la partie c), et
iii) un composant modificateur comprenant au moins des parties de la partie d), des parties de la partie c) et la partie e).

5. Système adhésif selon l'une quelconque des revendications 1 à 4, dans lequel au moins des parties de la partie c) sont constituées d'un PVAc fonctionnalisé.

6. Piégeur de formaldéhyde pour systèmes adhésifs à base d'urée-formaldéhyde pour la réduction des émissions de formaldéhyde en provenance des produits collés, le piégeur de formaldéhyde comprenant de l'urée, du résorcinol et un acide carboxylique.

7. Piégeur de formaldéhyde selon la revendication 6, le piégeur de formaldéhyde comprenant une dispersion de polymère.

8. Piégeur de formaldéhyde selon la revendication 6 ou 7, dans lequel l'acide carboxylique est de l'acide lactique.

9. Piégeur de formaldéhyde selon l'une quelconque des revendications 6 à 8, dans lequel la dispersion de polymère comprend un PVAc fonctionnalisé.

10. Procédé de fabrication d'un système adhésif comprenant les parties a) à e) selon l'une quelconque des revendications 1 à 5, ledit procédé comprenant les étapes consistant à fournir un premier composant i) comprenant des parties a), et un deuxième composant ii) comprenant la partie b) et au moins des parties de la partie c),
dans lequel les ingrédients urée et résorcinol de la partie d) sont ajoutés ensemble ou séparément au deuxième composant ii), et/ou sont fournis sous la forme d'un troisième composant iii) conjointement avec au moins des parties de la partie c), et dans lequel la partie e) est ajoutée au composant ii) ou au composant iii).
